# EUROPEAN PATENT SPECIFICATION

(11) **EP 4 410 591 B1**
(45) Date of publication and mention of the grant of the patent: **29.04.2026**
(21) Application number: 22892069.0
(22) Date of filing: 10.11.2022
(51) Int. Cl.: B60L 53/64, H01M 50/358, H01M 50/249, H01M 10/625, H01M 50/383, B60K 1/04, B60L 3/00, B60L 50/64, H01M 10/613, H01M 10/6554, H01M 10/6556, H01M 10/6567, H01M 10/6568, H01M 50/204, H01M 50/244, B60L 50/60

(54) **VEHICLE**
FAHRZEUG
VÉHICULE

(30) Priority: 12.11.2021 CN 202111336681
(43) Date of publication of application: 07.08.2024
(73) Proprietor: Great Wall Motor Company Limited, Hebei 071000 (CN)
(72) Inventor: CAO, Yongqiang, Baoding, Hebei 071000 (CN); LIANG, Hongwei, Baoding, Hebei 071000 (CN); LIU, Chongwei, Baoding, Hebei 071000 (CN); LI, Yan, Baoding, Hebei 071000 (CN)
(74) Representative: Klunker IP Patentanwälte PartG mbB
(86) International application number: PCT/CN2022/131233
(87) International publication number: WO 2023/083276

(56) References cited:
- WO-A1-2021/180469
- CN-A- 110 379 962
- CN-A- 111 900 302
- CN-A- 112 701 394
- CN-A- 112 793 668
- CN-A- 113 540 683
- CN-A- 113 771 648
- CN-U- 208 576 610
- CN-U- 209 401 715
- CN-U- 210 110 904
- US-A1- 2011 174 556
- US-B2- 8 268 469

## Description

### TECHNICAL FIELD

The present invention relates to the technical field of vehicles, and more particularly to a vehicle.

### BACKGROUND

With the national planning and support for the development of the new energy automobile industry, electric vehicles are becoming more and more popular, while a lot of terminal experience problems are existing, such as: short driving range of vehicles, vehicle collision safety and vehicle thermal runaway safety. Therefore, the lightweight and integrated designs of electric vehicles are particularly important.

In related technologies, in order to ensure the stability of the battery in the electric vehicle and prevent the impact of external foreign matters or external forces from damaging the battery, the battery is generally isolated from the outside. However, when the battery experiences thermal runaway, the high temperature and high pressure gas fire flow in the battery will not be discharged in time, which will cause safety accidents and endanger the life safety of drivers and passengers in the electric vehicle. In some electric vehicles, even if there is an exhaust channel arranged on the bottom plate of the battery housing for the battery to exhaust when the battery is experienced thermal runaway, but in order to ensure the reliability of the battery, the battery needs to be equipped with a plurality of protection plates to protect the battery, and the air outlets are required to be provided in the corresponding positions of these protection plates to discharge the high temperature and high pressure gas fire flow generated when the battery is experienced thermal runaway. However, this will increase the production process of the vehicle and increase the difficulty of production.

CN 112 701 394 A discloses a battery pack for a vehicle and the vehicle. The battery pack comprises a housing, battery modules and a cooling assembly, wherein a side plate of the housing is provided with spaced exhaust flow channels; the battery modules are arranged in the housing, the battery modules are provided with exhaust ports used for exhausting gas-fire flow when the battery cells of the battery modules are in thermal runaway, and the exhaust ports are communicated with the exhaust flow channels; and the cooling assembly is communicated with the exhaust flow channels.

CN 113 540 683 A discloses a battery pack lower box body, a battery pack and a vehicle. The battery pack lower box body comprises an edge beam frame, a bottom protection plate and an internal cross beam, the edge beam frame is provided with air inlet holes, exhaust channels and exhaust holes, the air inlet holes are communicated with the exhaust holes through the exhaust channels, and the air inlet holes are used for introducing a gas-fire flow generated during thermal runaway of a battery into the exhaust channels; the exhaust holes are used for discharging gas and fire flow flowing to the exhaust holes through the exhaust channels out of the lower box body, and the air inlet holes are divided into at least two layers.

### SUMMARY

It is an object of the present invention to provide a vehicle that fully utilizes the existing structure for exhaust, which can simplify the structural design of the vehicle.

The object is achieved with the features of the independent claim 1 regarding the vehicle. Further embodiments are defined in the dependent claims.

The additional aspects and advantages of the present invention will be partially provided in the following description, which will become apparent from the following description, or will be learned through the practice of the present invention that is defined in the claims.

### BRIEF DESCRIPTION OF THE DRAWINGS

The above and/or additional aspects and advantages of the present invention will become apparent and easily understood from the description of embodiments in conjunction with the drawings below, where:
FIG. 1 is a partial schematic view of a vehicle;
FIG. 2 is a partial explosive view of a vehicle;
FIG. 3 is a partial explosive view of a vehicle;
FIG. 4 is a partial schematic view of a vehicle;
FIG. 5 is a partial schematic view of a vehicle; and
FIG. 6 is a cross sectional view of a seat mounting beam in a vehicle.

The reference signs in drawings are listed:
100-vehicle; 10-vehicle body; 11-cockpit: 20-chassis; 21-left sill beam; 22-right sill beam; 221-second air inlet; 222-second air outlet; 2221-explosion-proof valve; 223-second exhaust channel; 23-front beam; 24-rear beam; 25-accommodation chamber; 251-sub-accommodation chamber; 30-bottom plate; 31-liquid cooling plate; 311-liquid cooling channel; 32-ptotection plate; 40-inner partition beam; 41- transverse partition beam; 42-longitudinal partition beam; 50-battery cell; 51-thermal conductive pad; 52-elastic thermal insulation pad; 53-first gap; 54-second gap: 55-third gap; 60-top plate assembly; 61-top plate; 611-first air inlet; 6111-cover; 612-first exhaust channel; 613-reinforcing rib; 62-seat mounting beam; 621-beam body; 622-inner partition plate; 63- adaptor; 631-third exhaust channel; and 632-third air inlet.

### DETAILED DESCRIPTION OF EMBODIMENTS

The invention will be described by reference to the attached drawings, and in detail below.

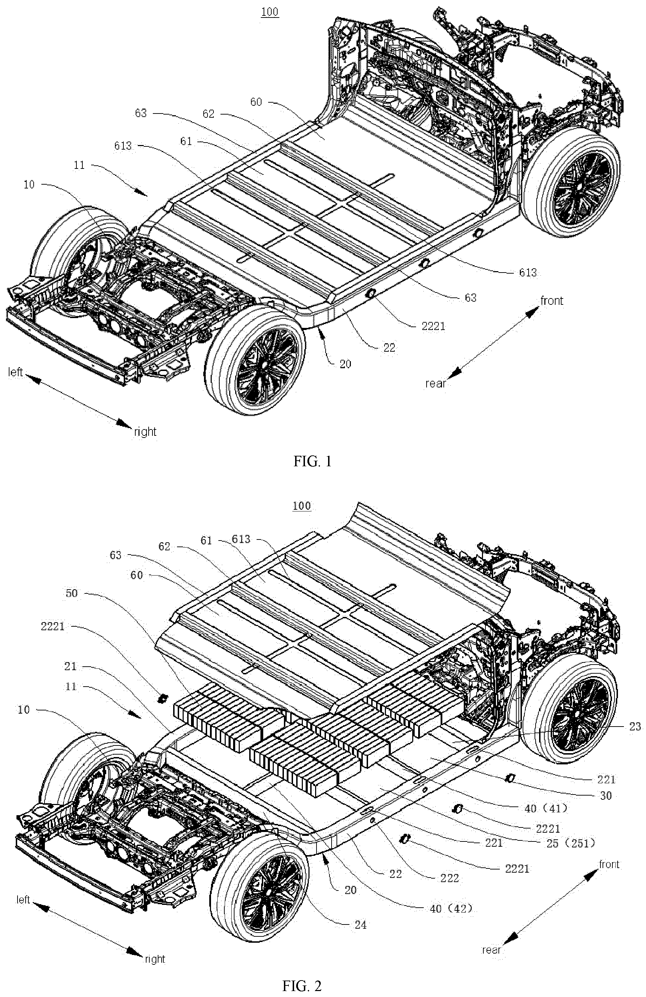

The vehicle 100, which can be an electric vehicle, is described below with reference to FIGS. 1 to 6.

As shown in FIGS. 1 to 3, a vehicle 100 includes primarily a chassis 20, a bottom plate 30, a top plate assembly 60, and a plurality of battery cells 50. The chassis 20 may include mainly a left sill beam 21, a right sill beam 22, a front beam 23, and a rear beam 24; the front beam 23 is connected between the left sill beam 21 and the right sill beam 22, and the rear beam 24 is connected between the left sill beam 21 and the right sill beam 22. The left sill beam 21, the right sill beam 22, the front beam 23 and the rear beam 24 can together define an accommodation chamber 25. Specifically, the left sill beam 21, the right sill beam 22, the front beam 23, and the rear beam 24 on the vehicle 100 are the original structures of the vehicle 100, that is, even if the battery cell 50 is not installed on the vehicle 100, the left sill beam 21, the right sill beam 22, the front beam 23, and the rear beam 24 will exist on vehicle 100. The left sill beam 21 and the right sill beam 22 are located on the left and right sides of the vehicle 100 respectively, which are respectively configured for limiting the coordination with the left and right sides of the vehicle door, for defining the space for the driver and passengers in the vehicle 100, and other functions, which are not described here.

Further, the front beam 23 and the rear beam 24 are arranged between the front and rear ends of the left sill beam 21 and the right sill beam 22, respectively, so that the area enclosed by the left sill beam 21, the right sill beam 22, the front beam 23 and the rear beam 24 can be separated from the rest of the areas on the vehicle 100 and ensure the reliability of the vehicle 100.

Further, as shown in FIGS. 1 to 3, the area commonly defined by the left sill beam 21, the right sill beam 22, the front beam 23, and the rear beam 24 is the accommodation chamber 25. The bottom plate 30 is arranged at the bottom of chassis 20 and encloses the bottom of the accommodation chamber 25, and the top plate assembly 60 is arranged at the top of the chassis 20 and is arranged opposite to the bottom plate 30, and the top plate assembly 60 encloses the top of the accommodation chamber 25. A plurality of battery cells 50 are arranged sequentially and connected to each other, and the plurality of battery cells 50 are arranged in the accommodation chamber 25. In particular, the top plate assembly 60 and the bottom plate 30 are arranged at the top and bottom of the accommodation chamber 25 respectively, and the top and bottom of the accommodation chamber 25 are sealed respectively to ensure the sealing of the accommodation chamber 25.

In this way, after the plurality of battery cells 50 are arranged in the accommodation chamber 25, on the one hand, the left sill beam 21 and the right sill beam 22 can limit the displacement of the plurality of battery cells 50 in the left and right direction, and the front beam 23 and the rear beam 24 can limit the displacement of the plurality of battery cells 50 in the front and back direction. The top plate assembly 60 and bottom plate 30 limit the displacement of the plurality of battery cells 50 in the upper and lower direction, which can prevent the displacement of the plurality of battery cells 50 mounting on the vehicle 100, so as to prevent the failure of battery cells 50 and even safety accidents, which can improve the reliability and safety of the plurality of battery cells 50 and the vehicle 100.

On the other hand, the left sill beam 21, the right sill beam 22, the front beam 23 and the rear beam 24 are connected to each other, and the joints are well sealed. The top plate assembly 60 and bottom plate 30 can also be reliably sealed by the top plate assembly 60 and bottom plate 30 to the top and bottom of the accommodation chamber 25, respectively. In this way, the whole accommodation chamber 25 can be separated from the outside. After the plurality of battery cells 50 are arranged in the accommodation chamber 25, the plurality of battery cells 50 can be separated from the outside, which can prevent the erosion of external foreign objects and the impact of external forces to damage the plurality of battery cells 50, so as to improve the stability and service life of the plurality of battery cells 50. Thus, the reliability of the vehicle 100 can be improved.

Further, the top plate assembly 60 and bottom plate 30 are also the original structures of the vehicle 100. That is to say, even if the plurality of battery cells 50 are not arranged in the vehicle 100, the vehicle 100 will also be provided with the top plate assembly 60 and the bottom plate 30, the bottom plate 30 can separate the road surface of vehicle 100 and vehicle 100 to prevent foreign objects on the road from damaging the parts of the vehicle 100, the top plate assembly 60 can be used for the mounting of other parts of the vehicle 100, and can be used for drivers and passengers.

Thus, the left sill beam 21, the right sill beam 22, the front beam 23, the rear beam 24, the top plate assembly 60 and the bottom plate 30, which are defined and sealed to the accommodate space 25, are the original structures of the vehicle 100. That is, the left sill beam 21, the right sill beam 22, the front beam 23, the rear beam 24, the top plate assembly 60 and the bottom plate 30 are not separately arranged structures of the vehicle 100 specifically for the mounting of the plurality of battery cells 50; but rather, while retaining their respective roles on vehicle 100, the left sill beam 21, the right sill beam 22, the front beam 23, the rear beam 24, the top plate assembly 60, and the bottom plate 30 together define and sealed to form the accommodation chamber 25 for the stable and reliable installation of the plurality of battery cells 50.

In this way, on the one hand, the structures and functions of the left sill beam 21, the right sill beam 22, the front beam 23, the rear beam 24, the top plate assembly 60, and the bottom plate 30 can be fully utilized to optimize the structural design of the vehicle 100, and on the other hand, the type and number of structures used to arrange the battery cells 50 on the vehicle 100 can be reduced. Thus, not only can the weight of vehicle 100 be reduced, the endurance mileage of the vehicle 100 can be increased, but also the production cost of the vehicle 100 can be reduced.

In addition, the plurality of battery cells 50 are arranged sequentially and connected to each other, where the sequential arrangement of the plurality of battery cells 50 can be arranged in rows and/or columns. It should be noted that the plurality of battery cells 50 can be arranged in rows in the front and rear direction for the plurality of battery cells 50, and the plurality of battery cells 50 can be arranged in rows in the left and right direction for the plurality of battery cells 50, which can not only make the arrangement of the plurality of battery cells 50 in the accommodation chamber 25 conform to the shape of the accommodation chamber 25, but also improve the integration of the plurality of battery cells 50 arranged on the vehicle 100, so that the plurality of battery cells 50 can be more compact, under the premise of the constant volume of accommodation chamber 25, the accommodation chamber 25 can accommodate more battery cells 50, so that the endurance mileage of the vehicle 100 can be further improved without changing the volume of the vehicle 100. It can also make the connection between the plurality of battery cells 50 more stable, which can further improve the reliability of the vehicle 100.

When the plurality of battery cells 50 are connected to each other, the plurality of battery cells 50 can jointly supply power to the vehicle 100, which can further improve the reliability of the plurality of battery cells 50. In addition, the positions between the bottom plate 30 and the top plate assembly 60 with the chassis 20 needed to be sealed are provided with the corresponding sealing material and sealing structure, so as to further improve the sealing of the accommodation chamber 25, which can further improve the safety of the plurality of battery cells 50 in the accommodation chamber 25, and extend the service life of the plurality of battery cells 50.

Further, as shown in FIGS. 1-3, the top plate assembly 60 is provided with a first exhaust channel 612, at least one of the left sill beam 21 and the right sill beam 22 is provided with a second exhaust channel 223, and the first exhaust channel 612 is in communication with the accommodation chamber 25, the second exhaust channel 223 is in communication with the first exhaust channel 612 and in communication with the external environment to discharge the gas fire flow after the thermal runaway of the battery cell 50. Specifically, when the battery cells 50 in the accommodation chamber 25 has a thermal runaway and generates a high temperature and high pressure gas fire flow, the high temperature and high pressure gas fire flow in the accommodation chamber 25 can first enter the first exhaust channel 612 of the top plate assembly 60; since the second exhaust channel 223 on at least one of the left sill beam 21 and the right sill beam 22 is in communication with the first exhaust channel 612, the gas and fire flow of the high temperature and high pressure can enter the second exhaust channel 223 from the first exhaust channel 612, and since the second exhaust channel 223 is in communication with the external environment, the high temperature and high pressure gas fire flow can be discharged from the second exhaust channel 223 to the outside. This arrangement can not only ensure the stability and reliability of the high temperature and high pressure gas fire flow from the accommodation chamber 25 to the outside, but also make full use of at least one of the left sill beam 21 and the right sill beam 22 and the structure of the top plate assembly 60 to exhaust, without need to arrange other components, which can simplify the structural design of the vehicle 100 to a certain extent.

Therefore, the first exhaust channel 612 on the top plate assembly 60 is in communication with the accommodation chamber 25, and is in communication with the second exhaust channel 223 on at least one of the left sill beam 21 and the right sill beam 22, and the second exhaust channel 223 is in communication with the external environment, when the high temperature and high pressure gas and fire flow is generated in the accommodation chamber 25, the original structure of the left sill beam 21 or the right sill beam 22 and the top plate assembly 60 on the vehicle 100 can be fully utilized for exhaust, and there is no need to arrange other components, which can simplify the structural design of the vehicle 100.

Further, in conjunction with DIGS. 1 and 3, the top plate assembly 60 includes a top plate 61 and a seat mounting beam 62, the top plate 61 is provided with a first air inlet 611, and the seat mounting beam 62 is arranged on the top plate 61, and the first exhaust channel 612 is defined together by the top plate 61 and the seat mounting beam 6, and the first air inlet 611 is in communication with the first exhaust channel 612. Specifically, when the battery cells 50 are experienced thermal runaway and a high temperature and high pressure gas and fire flow is generated, the high temperature and high pressure gas and fire flow can enter the first exhaust channel 612 jointly defined by the first air inlet 611 on the top plate 61 and the seat mounting beam 62. It is understandable that the high temperature and high pressure gas and fire flow will flow upward, such that the high temperature and high pressure gas and fire flow can directly enter the first exhaust channel 612 through the first air inlet 611 on the top plate 61, which can improve the exhaust efficiency of the vehicle 100.

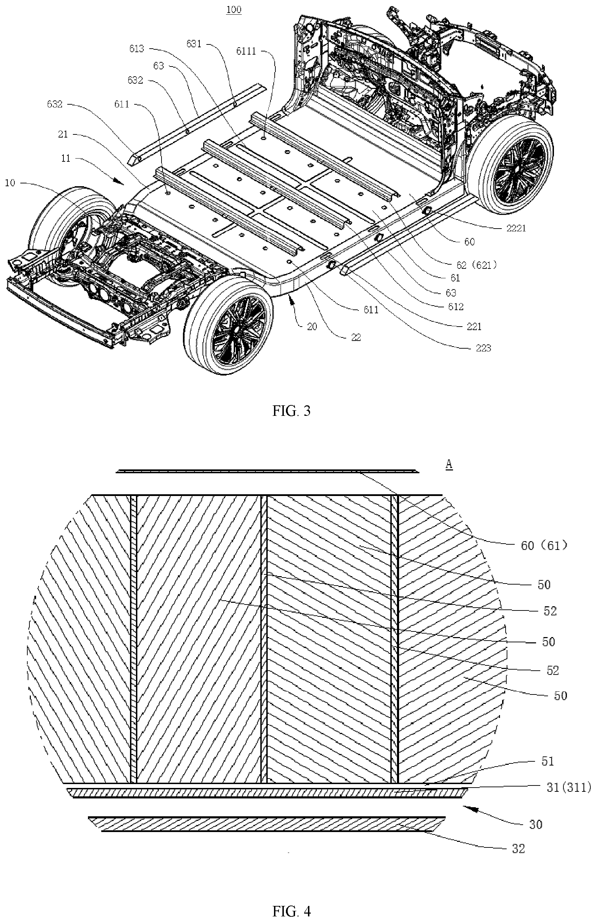

As shown in FIG. 3, the seat mounting beam 62 extends along the left and right direction, and a plurality of first air inlets 611 are provided. In the left and right direction, the seat mounting beam 62 corresponds to the plurality of first air inlets 611. Specifically, the seat needs to be mounted on the seat mounting beam 62. Due to specific technological requirements, the seat mounting beam 62 needs to extend and be arranged in the left and right direction. The seat mounting beam 62 provided by the left and right extension corresponds to the plurality of first air inlets 611, which can not only increase the air inflow of the first exhaust channel 612 per unit time, but also increase the air inlet of the first exhaust channel 612 more uniform, which can further improve the inlet efficiency of the vehicle 100.

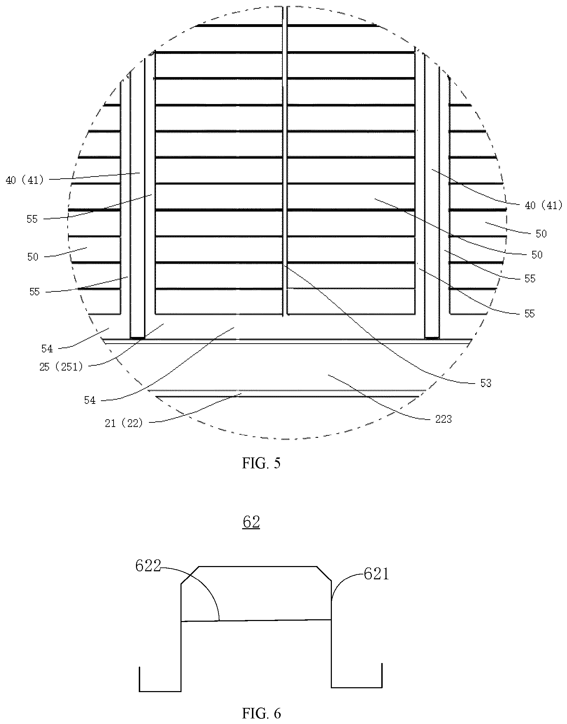

As shown in FIG. 3 and FIG. 6, the seat mounting beam 62 can mainly include the beam body 621 and the inner partition plate 622, the beam body 621 is arranged on the top plate 61, the inner partition plate 622 is arranged in the beam body 621 and the internal space of the beam body 621 is divided into an upper channel and a lower channel, and the lower channel constitutes the first exhaust channel 612. Specifically, the beam body 621 is arranged on the top plate 61, because the beam body 621 needs to be arranged with a seat, the inner partition plate 622 is arranged in the beam body 621, which can make the inner partition plate 622 dividing the inner space of the beam body 621 into two parts, and the two parts are respectively the upper channel and the lower channel, and the lower channel is the first exhaust channel 612. In this way, after the high temperature and high pressure gas fire of the accommodation chamber 25 flows into the interior of the beam body 621 from the first air inlet 611, it can flow directly to the first exhaust channel 612, which can improve the inlet efficiency of the first exhaust channel 612 to a certain extent. In addition, because the inner partition plate 622 separates the upper channel and the lower channel from each other, this can prevent the high temperature and high pressure gas fire flow in the lower channel from affecting the seat on the beam body 621, and affecting the ride experience of the driver and passengers, which can further improve the reliability of the vehicle 100.

As shown in FIG. 1 to FIG. 3, the plurality of battery cells 50 are arranged in rows and columns in the accommodation chamber 25, a first gap 53 is left between two adjacent rows of the battery cells 50. Specifically, it needs to be explained that the plurality of battery cells 50 can be arranged in rows in the left and right direction for the plurality of battery cells 50, and the plurality of battery cells 50 can be arranged in rows in the front and back direction for the plurality of battery cells 50, by leaving the first gap 53 between two columns of battery cells 50, which can not only includes the contact area between the battery cells 50 and the air in the accommodation chamber 25, so as to facilitate the heat exchange and cooling of the battery cells 50, but also when the temperature of a column of battery cells 50 rises, the heat will not be transferred to the adjacent column of the battery cells 50, which can ensure the independence of the two adjacent columns of battery cells 50 to a certain extent. This improves the reliability of the plurality of battery cells 50.

Further, the first air inlet 611 is arranged above the first gap 53. After the battery cells 50 are experienced thermal runaway and high temperature and high pressure gas fire flow is generated into the first gap 53, the high temperature and high pressure gas fire flow can directly flow upward from the first gap 53 to the first air inlet 611, and from the first air inlet 611 into the first exhaust channel 612, so as to further improve the inlet efficiency of the first exhaust channel 612.

In conjunction with FIGS. 2 and 4, the chassis 20 can also mainly include an inner partition beam 40 arranged in the accommodation chamber 25 and dividing the accommodation chamber 25 into at least two sub-accommodation chambers 251. Specifically, by providing the inner partition beam 40 such that the inner partition beam 40 divides the accommodation chamber 25 into at least two sub-accommodation chambers 251, and after dividing the plurality of battery cells 50 into multiple parts with the same number and corresponding shape and volume as the sub-accommodation chambers 251, the plurality of battery cells 50 correspond to at least two sub-accommodation chambers 251 one by one, and the plurality of battery cells 50 is mounted and arranged in at least two sub-accommodation chambers 251.

In this way, the contract area of heat exchange between the plurality of battery cells 50 and the outside can be increased without affecting the stable and reliable arrangement of the plurality of battery cells 50 in the accommodation chamber 25. Specifically, when there is no inner partition beam 40 arranged in the accommodation chamber 25, the plurality of battery cells 50 only contracts the left sill beam 21, the right sill beam 22, the front beam 23, the rear beam 24, the top plate assembly 60 and the bottom plate 30 for heat exchanging and cooling, after the inner partition beam 40 is placed in the accommodation chamber 25, the plurality of battery cells 50 can not only stabilize contact and heat exchange and cooling with the left sill beam 21, the right sill beam 22, the front beam 23, the rear beam 24, the top plate assembly 60, and bottom plate 30, but also contact heat exchange with the inner partition beam 40, which can reduce the temperature of the plurality of battery cells 50 when working to a certain extent. Thus, the reliability of the plurality of battery cells 50 can be improved.

In addition, the inner partition beam 40 can separate the accommodation chamber 25 into at least two sub-accommodation chambers 251, and in the event of a sharp increase in temperature or even fire of one or more battery cells 50 in one sub-accommodation chamber 251, the inner partition beam 40 can separate the battery cells 50 in the sub-accommodation chamber 251 from the battery cells 50 in other sub-accommodation chambers 251 to prevent the spread of high temperature or fire from the sub-accommodation chamber 251 to other sub-accommodation chambers 251, thereby further improving the reliability of the plurality of battery cells 50 and the vehicle 100.

In addition, the inner partition beam 40 can also play a role in improving the structural strength of the chassis 20 to a certain extent, which can improve the stability and firmness of the accommodation chamber 25, and thus improve the mounting reliability of the plurality of battery cells 50 in the accommodation chamber 25.

At least two inner partition beams 40 may be provided, and the at least two inner partition beams 40 are transverse partition beams 41, and the two ends of at least two transverse partition beams 41 are connected to the left sill beam 21 and the right sill beam 22, respectively, and are spaced apart in the front and rear direction. In this way, the accommodation chamber 25 can be divided into a plurality of sub-accommodation chamber 251 arranged in the front and rear direction, so that the plurality of battery cells 50 can be separated into at least three parts in the front and rear direction, which can not only further improve the contact area of heat exchanging of the plurality of battery cells 50 and the inner partition beam 40, but also improve the heat exchange performance of the plurality of battery cells 50. In addition, when a battery cell 50 in a sub-accommodation chamber 251 is on fire at high temperature, due that the plurality of battery cells 50 are divided into at least three parts, the inner partition beam 40 can separate the sub-accommodation chamber 251 of the battery cell 50 that is on fire at high temperature from the battery cells 50 in other sub-accommodation chambers 251 to reduce the loss. In addition, since at least two inner partition beams 40 divide the accommodation chamber 25 into the plurality of sub-accommodation chambers 251, the volume of each sub-accommodation chamber 251 is smaller, that is, the number of battery cells 50 in each sub-accommodation chamber 251 is smaller, so that in the event of a fire in one of the sub-accommodation chambers 251, the loss of the plurality of battery cells 50 can be further reduced due to the number of battery cell 50 in the sub-accommodation chamber 251 is smaller.

At least two inner partition beams 40 may be provided, and the at least two inner partition beams 40 are longitudinal partition beams 42, and two ends of at least two longitudinal partition beams 42 are connected to the front beam 23 and the rear beam 24, respectively, and are spaced apart in the left and right direction. In this way, the accommodation chamber 25 can be divided into a plurality of sub-accommodation chambers 251 arranged in the left and right direction, so that the plurality of battery cells 50 can be separated into at least three parts in the left and right direction, which can not only further improve the contract area of heat exchanging the plurality of battery cells 50 and the inner partition beam 40, but also improve the heat exchange performance of the plurality of battery cells 50. In addition, when a battery cell 50 in a sub-accommodation chamber 251 is on fire at high temperature, due that the plurality of battery cells 50 are divided into at least three parts, the inner partition beam 40 can separate the sub-accommodation chamber 251 of the battery cell 50 that is on fire at high temperature from the battery cells 50 in other sub-accommodation chambers 251 to reduce the loss. In addition, since at least two inner partition beams 40 divide the accommodation chamber 25 into the plurality of sub-accommodation chambers 251, the volume of each sub-accommodation chamber 251 is smaller, that is, the number of battery cells 50 in each sub-accommodation chamber 251 is smaller, so that in the event of a fire in one of the sub-accommodation chambers 251, the loss of the plurality of battery cells 50 can be further reduced due to the number of battery cell 50 in the sub-accommodation chamber 251 is smaller.

As shown in FIG. 2, at least two inner partition beams 40 may be provided, and the at least two inner partition beams 40 include a transverse partition beam 41 and a longitudinal partition beam 42, the transverse partition beam 41 and the longitudinal partition beam 42 are arranged cross to each other; two ends of the transverse partition beam 41 are respectively connected to the left sill beam 21 and the right sill beam 22, and are arranged at intervals in the front and rear direction; and two ends of the longitudinal partition beam 42 are respectively connected to the front beam 23 and the rear beam 24 and are arranged in the left and right direction, and are arranged at intervals in the left and right direction. In addition, when a battery cell 50 in a sub-accommodation chamber 251 is on fire at high temperature, due that the plurality of battery cells 50 are divided into at least four parts, the inner partition beam 40 can separate the sub-accommodation chamber 251 of the battery cell 50 that is on fire at high temperature from the battery cells 50 in other sub-accommodation chambers 251 to reduce the loss.

In addition, since at least two inner partition beams 40 divide the accommodation chamber 25 into a plurality of sub-accommodation chamber 251, the volume of each sub-accommodation chamber 251 is smaller, that is, the number of battery cells 50 in each sub-accommodation chamber 251 is smaller, so that when a fire occurs in one of the sub-accommodation chambers 251, since the number of battery cells 50 in the sub-accommodation chamber 251 is smaller, the loss of the plurality of battery cells 50 can be further reduced. It should be noted that, in this arrangement, on the premise that the number of inner partition beam 40 is the same, the number of the plurality of sub-accommodation chambers 251 divided from the accommodation chamber 251 by the inner partition beam 40 can be increased, so that the number of battery cells 50 in each sub-accommodation chamber 251 can be further reduced under the premise that the constant number of the plurality of battery cells 50.

Further, according to the specific structure of the vehicle 100 and specific process requirement, the number of inner partition beams 40 and the arrangement mode in the accommodation chamber 25 can be selectively arranged, which can further improve the applicability of inner partition beam 40 and thus further improve the reliability of the vehicle 100.

It should be noted that when the inner partition beams 40 include the transverse partition beam 41 and the longitudinal partition beam 42, the number of the transverse partition beam 41 and the longitudinal partition beam 42 can be different, and the number of the transverse partition beam 41 and the longitudinal partition beam 42 can be adjusted according to the specific process requirements. This increases the variability and flexibility of the mounting of the inner partition beam 40 in the accommodation chamber 25, thereby the applicability of the inner partition beam 40 is improved.

As shown in FIG. 5, the plurality of battery cells 50 are respectively arranged in at least two sub-accommodation chambers 251, and a second gap 54 is left between the at least two sub-accommodation chambers 251 and the inner partition beam 40, and a third gap 55 is provided between the top plate 61 and the top of the battery cells 50, and the third gap 55 is in communication with the first gap 53 and the second gap 54 respectively; and also in communication with the first air inlet 611. Specifically, by leaving the second gap 54 between the inner partition beam 40 and the battery cells 50 in the adjacent column, the contact area between the plurality of battery cells 50 and the air can be increased, so as to improve the heat dissipation performance of the plurality of battery cells 50. Further, by arranging the third gap 55 between the top plate 61 and the top of the battery cell 50, and the third gap 55 is in communication with the first gap 53 and the second gap 54 respectively, thus, when the battery cells 50 are experienced the thermal runaway in row adjacent to the inner partition beam 40, the high temperature and high pressure gas and fire flow directly enters the first gap 53 and the second gap 54, and the high temperature and high pressure gas and fire flow from the first gap 53 and the second gap 54 quickly and directly into the third gap 55, and then the high temperature and high pressure gas and fire flow from the third gap 55 directly through the first air inlet 611 into the first exhaust channel 612. This arrangement can not only further improve the exhaust efficiency, but also ensure the exhaust of the accommodation chamber 25 more uniform, can improve the uniformity of the air pressure in the accommodation chamber 25, so as to improve the reliability of the accommodation chamber 25.

Further, as shown in FIG. 1 to FIG. 3, a plurality of seat mounting beams 62 are provided, and the plurality of seat mounting beams 62 are spaced apart in the front and rear direction. The top plate assembly 60 can also include an adaptor 63 provided with a third exhaust channel 631, the third exhaust channel 631 is arranged on at least one of the left sill beam 21 and the right sill beam 22, and the first exhaust channels 612 of the plurality of seat mounting beams 62 are in communication with the third exhaust channel 631, and the third exhaust channel 631 is also in communication with the second exhaust channel 223. Specifically, since the seat mounting beam 62 requires to be mounted with a seat, the seat mounting beam 62 can be positioned as a whole above the left sill beam 21 and the right sill beam 22 after the seat mounting beam 62 is arranged on the top plate 61, in order to enable the first exhaust channel 612 in the seat mounting beam 62 to be in communication stably and smoothly with the second exhaust channel 223 on at least one of the left sill beam 21 and the right sill beam 22, an adaptor 63 can be arranged on at least one of the left sill beam 21 and the right sill beam 22, and a third exhaust channel 631 can be arranged in the adaptor 63. The first exhaust channel 612 can first connect with the third exhaust channel 631, and then in communication with the second exhaust channel 223 through the third exhaust channel 631 to realize the communication between the first exhaust channel 612 and the second exhaust channel 223. This can not only improve the reliability of the exhaust of the vehicle 100, but also extend the path of the high temperature and high pressure gas fire flow from the accommodation chamber 25 to the external environment, so as to reduce the temperature and pressure of the high temperature and high pressure gas fire flow to the external environment, and to further improve the reliability of the vehicle 100.

In conjunction with FIG. 1 to FIG. 3, at least one of the left sill beam 21 and the right sill beam 22 is provided with a second air inlet 221, the second air inlet 221 is arranged on the upper side wall of the at least one of the left sill beam 21 and the right sill beam 22, the adaptor 63 extends in the front and rear direction, and the inner side wall of the adaptor 63 is provided with a plurality of third air inlets 632; the lower side wall of the adaptor 63 is provided with a first air outlet, and the plurality of third air inlets 632 are in communication with a plurality of first exhaust channels 612, and the first air outlet is in communication with the second air inlet 221. Specifically, when the battery cells 50 are experienced the thermal runaway and the high temperature and high pressure gas fire flow is generated, the high temperature and high pressure gas fire flow can enter the first exhaust channel 612 through the first air inlet 611 from the accommodation chamber 25, and enter the third exhaust channel 631 in the adaptor 63 from the first exhaust channel 612 through the third air inlet 632 on the inner side wall of the adaptor 63. The high temperature and high pressure gas fire flow flows from the first air outlet on the lower side wall of the third exhaust channel 631 to the second air inlet 221 on at least one of the left sill beam 21 and the right sill beam 22, and enters into the second exhaust channel 223 through the second air inlet 221 and flows out of the second air outlet 222 in the second exhaust channel 223. This can prevent the high temperature and high pressure gas fire flow from leaking in the process flowing from the first exhaust channel 612 to the third exhaust channel 631, and entering the second exhaust channel 223 from the third exhaust channel 631, thereby, the reliability of exhaust of the vehicle 100 is improved.

In addition, the lower side wall of the adaptor 63 can be directly opened to form the first air outlet, or a plurality of first outlets can be arranged at intervals on the lower side wall of the adaptor 63. The first air outlet can be selectively arranged according to the specific process requirements of the vehicle 100, thereby the suitability of the adaptor 63 is improved. Further, the upper side walls of at least one of the left sill beam 21 and the right sill beam 22 can be directly opened to form a second air inlet 221, or a plurality of second air inlets 221 can be arranged at intervals on the upper side walls of at least one of the left sill beam 21 and the right sill beam 22, which can be selectively arranged according to the specific process requirements of the vehicle 100, thus, the suitability of at least one of the left sill beam 21 and the right sill beam 22 is improved.

The first air inlet 611 may be provided with a cover 6111, and the cover 6111 can be arranged at the first air inlet 611 to be openable and closable. Specifically, when the battery cells 50 in the accommodation chamber 25 are normally operated, the cover 6111 can seal the first air inlet 611 stably and reliably, which can prevent the first air inlet 611 from being blocked by the foreign objects during the assembly and production of the vehicle 100, and affecting the smooth flow of the first air inlet 611; in the event of thermal runaway of the battery cells 50 in the accommodation chamber 25, the cover 6111 can open the first air inlet 611, so that the high temperature and high pressure gas fire flow in the accommodation chamber 25 is discharged from the first air inlet 611. In this way, the cover 6111 can ensure the stability and reliability of the high temperature and high pressure gas fire flow discharged from the air inlet 221 when the battery cells 50 are experienced thermal runaway.

A weakening structure portion that is capable of being disconnected may be provided between the cover 6111 and the liquid cooling plate 31. Specifically, when the battery cells 50 in the accommodation chamber 25 is normally operated, the first air inlet 611 can be stably and reliably sealed by the cover 6111, which can prevent the first air inlet 611 from being blocked by foreign objects during the assembly and production of the vehicle 100, and affecting the smooth flow of the first air inlet 611. In the case of thermal runaway of battery cells 50 in the accommodation chamber 25, the high temperature and high pressure gas fire flow will instantly melt the weakening structure portion, thus the conduction of the first air inlet 611 is realized. This arrangement can not only ensure that when the battery cells 50 are experienced the thermal runaway, the accommodation chamber 25 is in communication with the first exhaust channel 612, and the communication principle is relatively simple, which can be convenient to be implemented. The weakening structure portion that can be disconnected can be a plug, a film and a net cover, which is not limited herein and is not repeated herein.

The cover 6111 may be provided with an air vent. Specifically, when the battery cells 50 in the accommodation chamber 25 is normally operated, the first air inlet 611 can be stably and reliably sealed by the cover 6111, which can prevent the first air inlet 611 from being blocked by foreign objects during the assembly and production of the vehicle 100, and affecting the smooth flow of the first air inlet 611. In the case of thermal runaway of battery cells 50 in the accommodation chamber 25, the high temperature and high pressure gas fire flow will can be discharged from the air vent of the cover 6111, so as to ensure the communication between the accommodation chamber 25 and the first exhaust channel 612 when the battery cell 50 is experienced the thermal runaway, which can improve the reliability of the cover 6111. It should be noted that when the battery cells 50 in the accommodation chamber 25 are normally operated, the accommodation chamber 25 can also be in communication with the first exhaust channel 612 through the air vent of the cover 6111.

In conjunction with FIG. 2, at least one of the left sill beam 21 and the right sill beam 22 is provided with a second air outlet 222, and the second air outlet 222 is arranged at the outside wall and/or bottom wall of the at least one of the left sill beam 21 and the right sill beam 22. Specifically, the high temperature and high pressure gas fire flow in the accommodation chamber 25 enters the first exhaust channel 612 from the first air inlet 611 and flows into the second air inlet 221 of at least one of the left sill beam 21 and the right sill beam 22 in the first exhaust channel 612, then enters the second exhaust channel 223 on at least one of the left sill beams 21 and right sill beams 22 through the second air inlet 221, and flows out of the second outlet port 222 on the outside wall and/or bottom wall of the at least one of the left sill beams 21 and right sill beams 22. This arrangement can prevent the high temperature and high pressure gas fire flow from flowing out of the second air outlet 222 to affect the environment surrounding the vehicle 100, which can further improve the smoothness and stability of the inlet of the second exhaust channel 223, so as to improve the reliability of the exhaust of the vehicle 100 to a certain extent.

In conjunction with FIG. 5, the first air outlet is constructed as a hole with a cross-section being a circle and extending in an up and down direction. This can not only make the first air outlet fit with the second air inlet 221 of at least one of the left sill beam 21 and the right sill beam 22, which can improve the inlet efficiency when the high temperature and high pressure gas fire flow enters the second air inlet 221 from the first air outlet, but also reduce the inlet noise of the second air inlet 221.

In conjunction with FIG. 1 to FIG. 3, the second air outlet 222 is provided with an explosion-proof valve 2221, which can detect the pressure in the second exhaust channel 223 and selectively adjust the exhaust volume of the second air outlet 222 according to the test results. For example, when the air pressure in the second exhaust channel 223 is high, the explosion-proof valve 2221 can control the second air outlet 222 to increase the amount of the high temperature and high pressure gas fire flow discharged per unit time, so that the air pressure in the second exhaust channel 223 can be rapidly reduced, so that the structure of the second exhaust channel 223 and the accommodation chamber 25 can be stable; when the air pressure in the second exhaust channel 223 is small and close to the external pressure, the explosion-proof valve 2221 can control the second air outlet 222 to reduce the amount of the high temperature and high pressure gas fire flow discharged per unit time until the air pressure in the second exhaust channel 223 is equal to the external pressure, the explosion-proof valve 2221 controls the second outlet 222 to stop the exhaust. This can further improve the stability and reliability of the exhaust of the second exhaust channel 223.

In addition, the explosion-proof valve 2221 can also prevent the explosion of the high temperature and high pressure gas fire flow when the second air outlet 222 discharges the high temperature and high pressure gas fire flow, which can further improve the reliability and stability of the exhaust of the vehicle 100. Further, the explosion-proof valve 2221 is provided with a waterproof breathable film, so that the explosion-proof valve 2221 can continuously and reliably measure the air pressure in the second exhaust channel 223 through the waterproof breathable film on the premise of preventing water from contacting the explosion-proof valve 2221 and eroding and damaging the explosion-proof valve 2221, so as to prevent the waterproof breathable film from affecting the normal operation of the explosion-proof valve 2221, which can further improve the stability and reliability of the explosion-proof valve 2221. Further, the first air inlet 611 and the second air outlet 22 can be at least one of a circle, an oblong, a quadrilateral, a pentagonal or a hexagonal, which is not limited herein.

In conjunction with FIG. 1 to FIG. 3, the vehicle 100 can also include a vehicle body 10, the vehicle body 10 is provided with a cockpit 11, the cockpit 11 is located above the chassis 20 and the top plate assembly 60 is connected with the cockpit 11 and acts as a floor of the cockpit 11. Specifically, by placing the cockpit 11 above the chassis 20, the top plate assembly 60 at the top of the accommodation chamber 25 of the bottom plate 30 can be used as the floor of the cockpit 11, which can not only separate the plurality of battery cells 50 from the cockpit 11, prevent the safety of drivers and passengers in the cockpit 11 in case of a safety accident involving the plurality of battery cells 5; but also ensure that the top plate assembly 60 can give full play to its own functions and roles, and the structural design of the vehicle 100 can be optimized.

Further, the top plate assembly 60 is a stamped or thermal formed steel plate. This can not only facilitate the production of the top plate assembly 60, but also improve the strength of the top plate assembly 60, which can further improve the reliability of separating the battery cells 50 from the cockpit 11, and prevent the external force in the cockpit 11 from impacting the battery cells 50 and causing damage to the battery cells 50, and further improve the reliability of the vehicle 100. Further, a side of the top plate assembly 60 facing the accommodate space 25 is provided with high temperature resistant and fire retardant materials, this can prevent the high-temperature gas or flame from burning through the top plate assembly 60 and entering the cockpit 11 in the event of battery cells 50 catching fire, endangering the life safety of the driver and passengers in the cockpit 11, which further improves the reliability of the top plate assembly 60 and the entire vehicle 100.

In addition, the top plate assembly 60 is provided with a reinforcing rib 613, the reinforcing rib 613 is connected to the corresponding inner partition beam 40 inside the accommodates space 25. This can further ensure that each sub-accommodation chamber 251 is independent of each other, can play a role in physical isolation, can further prevent the expansion and deformation of the top plate assembly 60 caused by the high-temperature and high-pressure gas and fire flow after the thermal runaway of the battery cells 50, the high temperature and high pressure gas fire flow is prevented form flowing in the accommodation chamber 25, which results in the battery cell 50 thermal runaway in advance diffusion and spread, and the reliability of the vehicle 100 is further improved.

In conjunction with FIG. 4, a thermal conductive pad 51 is arranged at the bottom of the plurality of battery cells 50, and the thermal conductive pad 51 is arranged on a liquid cooling plate 31. Specifically, the thermal conductive pad 51 is arranged at the bottom of the plurality of battery cells 50, which can make the heat exchanging and cooling between the plurality of battery cells 50 and the coolant in the liquid cooling channel 311 more uniform. Specifically, the plurality of battery cells 50 can transfer the heat line to the thermal conductive pad 51, the heat can be evenly dispersed and transferred on the thermal conductive pad 51, and after the heat is evenly distributed to the thermal conductive pad 51, the heat is then exchanged with the coolant in the liquid cooling channel 311, and the heat is transferred to the coolant. This can make the heat dissipation of the plurality of battery cells 50 more uniform and fast, which can improve the heat transfer efficiency of the plurality of battery cells 50.

Further, the thermal conductive pad 51 can be a thermal conductive structural adhesive. On the one hand, on the premise that the thermal conductive structural adhesive will not rub and wear the lower surface of the plurality of battery cells 50, the force on the bottom of the plurality of battery cells 50 plays a buffer role, which can further prevent the external impact on the bottom of the vehicle 100 to damage the plurality of battery cells 50, and improve the reliability of the plurality of battery cells 50; on the other hand, the plurality of battery cells 50 can first be stably and firmly arranged on the thermal conductive pad 51, such that the thermal conductive pad 51 is arranged in the accommodation chamber 25, so that the plurality of battery cells 50 are stably and firmly arranged in the accommodation chamber 25, which can effectively improve the overall mode of the plurality of battery cells 50, and avoid the force or connection failure of a single battery cell 50.

Further, one of the top plate assembly 60 and the bottom plate 30 is fixed to the chassis 20, and another one is detachably arranged on the chassis 20. Specifically, when the plurality of battery cells 50 are normally operated, the accommodation chamber 25 is in a sealed state, and when the plurality of battery cells 50 fail and need to be repaired or replaced, the accommodation chamber 25 needs to be opened. Thus, by fixing one of the top plate assembly 60 and the bottom plate 30 to the chassis 20 and another one is detachably arranged on the chassis 20, only one of the top plate assembly 60 and the bottom plate 30 hat can be detachably connected chassis 20 needs to be removed to repair and replace the plurality of battery cells 50 in the accommodation chamber 25 in the event that the plurality of battery cells 50 fail and need to be repaired or replaced; which can facilitate the later maintenance of the user to the vehicle 100.

It should be noted that in the case of bottom plate 30 is detachably arranged to the chassis 20, when the bottom plate 30 is removed to repair and replace the plurality of battery cells 50 in the accommodation chamber 25, it is necessary to operate from the bottom to top to repair and replace the plurality of battery cells 50. In the case that the top plate assembly 60 is detachably arranged to the chassis 20, when the top plate assembly 60 is removed to repair and replace the plurality of battery cells 50 in the accommodation chamber 25, the plurality of battery cells 50 need to be repaired and replaced from top to bottom.

Further, one of the top plate assembly 60 and the bottom plate 30 is fixed to the chassis 20 not only improves the stability and firmness of the connection of one of the top plate assembly 60 and the bottom plate 30 to the chassis 20, but also simplifies the production process of the vehicle 100. There is no need for a separate assembly process to place one of the bottom 30 and the top plate assembly 60 on the chassis 20, thus the difficulty of assembly production of the vehicle 100 is reduced.

In conjunction with FIG. 4, an elastic thermal insulation pad 52 is arranged between two adjacent battery cells 50 arranged in the same direction. This arrangement can not only prevent two adjacent battery cells 50 from transferring heat to each other, so as to prevent one battery cell 50 from failing and the temperature rising sharply, the battery cell 50 will transfer heat to the adjacent battery cell 50 and the temperature of the adjacent battery cell 50 will also rise sharply, resulting in a large-scale thermal runaway of the plurality of battery cells 50. This can ensure the independence of the heating between the plurality of battery cells 50, which can improve the safety and reliability of the plurality of battery cells 50.

In addition, the elastic thermal insulation pad 52 can play a buffer role between two adjacent battery cells 50 to prevent two adjacent battery cells 50 from rubbing against each other, resulting in damage to the battery cells 50, and further improve the reliability of the plurality of battery cells 50. In addition, the top portion and side portion of the plurality of battery cells 50 can be provided with insulation protection members to further improve the safety and reliability of the plurality of battery cells 50.

In conjunction with FIG. 4 and FIG. 5, the bottom plate 30 can mainly include a liquid cooling plate 31 and a protection plate 32. Specifically, since the plurality of battery cells 50 are arranged in the accommodation chamber 25, the plurality of battery cells 50 can only contact with the left sill beam 21, the right sill beam 22, the front beam 23, the rear beam 24, the top plate assembly 60, the bottom plate 30 or the inner partition beam 40 for heat exchanging and cooling, which will not only make the cooling effect of the plurality of battery cells 50 poor, but also due to contact heat exchanging and cooling, only the battery cells 50 that come into contact with the left sill beam 21, the right sill beam 22, the front beam 23, the rear beam 24, the top plate assembly 60, the bottom plate 30, or the inner partition beam 40 can receive a certain degree of contact cooling effect; the battery cells 50 that do not come into contact with the left sill beam 21, the right sill beam 22, the front beam 23, the rear beam 24, the top plate assembly 60, the bottom plate 30, or the inner partition beam 40 will have a worse heat exchanging and cooling effect, which will reduce the reliability and safety of the plurality of battery cells 50

Therefore, by providing the liquid cooling plate 31 on the bottom plate 30 and connecting the liquid cooling joint to the liquid cooling channel 311 in the liquid cooling plate 31, the coolant can enter the liquid cooling channel 311 in the liquid cooling plate 31 through the liquid cooling joint. When the coolant flows steadily and continuously in the liquid cooling channel 311, it can conduct uniform and stable heat exchanging with the plurality of battery cells 50, thus the temperature of the plurality of battery cells 50 can be reduced. This can not only further improve the heat dissipation performance of the plurality of battery cells 50, but also the liquid cooling plate 31 will not occupy the accommodation chamber 25, so it will not affect the mounting and arranging of the plurality of battery cells 50. The coolant can be water, but is not limited to this, and is not limited here.

It should be noted that the coolant flows out of the cooling system of the vehicle 100, and after heat exchanging with the plurality of battery cells 50, the temperature of the coolant is raised, and then the coolant flows back into the cooling system of the vehicle 100 for cooling process. After the temperature of the coolant itself returns to the normal value, the coolant continues to flow to the liquid cooling channel 311 to stably cool the plurality of battery cells 50, so as to realize the cooling cycle of the plurality of battery cells 50, which can further improve the reliability of the liquid cooling plate 31.

Further, the protection plate 32 is arranged at the bottom of the liquid cooling plate 31, so that the protection plate 32 can shield the liquid cooling plate 31, so as to prevent the external force from impacting the liquid cooling plate 31, resulting in the damage of the liquid cooling plate 31, so that the liquid cooling plate 31 cannot effectively heat exchange and cool the plurality of battery cells 50, and further improve the reliability of the bottom plate 30. The protection plate 32 can be made of high-strength steel, and the surface of the protection plate 32 is sprayed with an armor layer, which can further improve the structural strength of the protection plate 32, and can improve the protection of the protection plate 32 against the liquid cooling plate 31, so as to further improve the reliability of the plurality of battery cells 50 in the accommodation chamber 25.

The top plate assembly 60 may be provided with a reinforcing rib 613, and a plurality of reinforcing ribs 613 are provided, the plurality of reinforcing ribs 613 on the top plate assembly 60 extends in the left and right direction and arranged at intervals in the front and rear direction. Specifically, when the inner partition beam 40 is the transverse partition beam 41 and is arranged at intervals in the front and rear direction, the plurality of reinforcing ribs 613 on the top plate assembly 60 can extend in the left and right directions and are arranged at intervals in the front and rear direction, and the plurality of reinforcing ribs 613 can be arranged in accordance with the arrangement of the transverse partition beam 41, so that the reinforcing ribs 613 and the transverse partition beam 41 can be arranged one by one. The reliability of the top plate assembly 60 can be improved by further improving the stability and firmness of the physical isolation of the reinforcing ribs 613 and the transverse partition beam 41 to the accommodation chamber 25.

The plurality of reinforcing ribs 613 may extend in the front and rear direction and may be arranged at intervals in the left and right direction. Specifically, when the inner partition beam 40 is the longitudinal partition beam 42, the plurality of reinforcing ribs 613 on the top plate assembly 60 extends in the front and rear direction and are arranged at intervals in the left and right direction. The plurality of reinforcing ribs 613 can be arranged in accordance with the arrangement of the transverse partition beam 41, so that the reinforcing ribs 613 and the transverse partition beam 41 can be arranged one by one. The reliability of the top plate assembly 60 can be improved by further improving the stability and firmness of the physical isolation of the reinforcing ribs 613 and the transverse partition beam 41 to the accommodation chamber 25.

As shown in FIG. 2, the plurality of reinforcing ribs 613 may extend in the left and right direction and the front and rear direction, respectively, and may be arranged cross to each other. Specifically, when the inner partition beams 40 are transverse partition beam 41 and the longitudinal partition beam 42 arranged cross to each other, the plurality of reinforcing ribs 613 on the top plate assembly 60 extends in the front and rear direction and the left and right direction and are arranged cross to each other. The plurality of reinforcing ribs 613 can be arranged in accordance with the arrangement of the transverse partition beam 41 and the longitudinal partition beam 42, so that the reinforcing ribs 613 and the transverse partition beam 41 as well as the longitudinal partition beam 42 can be arranged one by one. The reliability of the top plate assembly 60 can be improved by further improving the stability and firmness of the physical isolation of the reinforcing ribs 613 and the transverse partition beam 41 and the longitudinal partition beam 42 to the accommodation chamber 25.

Further, the arrangement of reinforcing ribs 613 on the top plate assembly 60 can be selectively arranged according to the structural design of different vehicles 100 and the specific process requirements, so as to improve the applicability of the top plate assembly 60.

In the description of the present disclosure, it is to be understood that the terms "up", "down", "front", "back", "left", "right", "top", "bottom", "inside", "outside", etc. indicate orientation or position relationships based on the orientation or position relationships shown in the attached drawings only for the purpose of facilitating the description of the present disclosure and simplifying the description. It is not an indication or implication that the device or element referred to must have a particular orientation, be constructed and operate in a particular orientation and therefore cannot be construed as a limitation of the present disclosure.

## Claims

1. A vehicle (100), comprising:
a chassis (20), comprising a left sill beam (21), a right sill beam (22), a front beam (23), and a rear beam (24); wherein the front beam (23) is connected between the left sill beam (21) and the right sill beam (22), the rear beam (24) is connected between the left sill beam (21) and the right sill beam (22), and the left sill beam (21), the right sill beam (22), the front beam (23), and the rear beam (24) together define an accommodation chamber (25);
a bottom plate (30), arranged at a bottom of the chassis (20) and configured for closing a bottom of the accommodation chamber (25);
a top plate assembly (60), arranged on a top of the chassis (20) and arranged opposite to the bottom plate (30), wherein the top plate assembly (60) is configured for closing a top of the accommodation chamber (25);
and
a plurality of battery cells (50), wherein the plurality of the battery cells (50) are successively arranged and connected to each other, and the plurality of the battery cells (50) are arranged in the accommodation chamber (25); **characterized in that**:
the top plate assembly (60) is provided with a first exhaust channel (612), at least one of the left sill beam (21) and the right sill beam (22) is provided with a second exhaust channel (223), and the first exhaust channel (612) is in communication with the accommodation chamber (25), the second exhaust channel (223) is in communication with the first exhaust channel (612) as well as an external environment to discharge a gas fire flow after the battery cells (50) are experienced thermal runaway.

2. The vehicle (100) according to claim 1, wherein the top plate assembly (60) comprises a top plate (61) and a seat mounting beam (62); the top plate (61) is provided with a first air inlet (611), the seat mounting beam (62) is arranged on the top plate (61) and defines the first exhaust channel (612) together with the top plate (61), and the first air inlet (611) is in communication with the first exhaust channel (612).

3. The vehicle (100) according to claim 2, wherein the seat mounting beam (62) extends in a left and right direction, and a plurality of first air inlets (611) are provided, and the seat mounting beam (62) corresponds to the plurality of first air inlets (611) in the left and right direction.

4. The vehicle (100) according to claim 2 or 3, wherein the seat mounting beam (62) comprises a beam body (621) and an inner partition plate (622); the beam body (621) is arranged on the top plate (61), the inner partition plate (622) is arranged in the beam body (621) and divides an inner space of the beam body (621) into an upper channel and a lower channel, and the lower channel constitutes the first exhaust channel (612).

5. The vehicle (100) according to any one of claims 2 to 4, wherein the plurality of battery cells (50) are arranged in rows and columns in the accommodation chamber (25), and a first gap (53) is left between two adjacent rows of the plurality of battery cells (50), and the first air inlet (611) is arranged above the first gap (53).

6. The vehicle (100) according to claim 5, wherein the chassis (20) further comprises an inner partition beam (40); the inner partition beam (40) is arranged in the accommodation chamber (25) and divides the accommodation chamber (25) into at least two sub-accommodation chambers (251), the plurality of battery cells (50) are respectively arranged in the at least two sub-accommodation chambers (251), and a second gap (54) is left between the inner partition beam (40) and the plurality of battery cells (50); a third gap (55) is arranged between the top plate (61) and a top of the plurality of battery cells (50), and the third gap (55) is respectively in communication with the first gap (53), the second gap (54), and the first air inlet (611).

7. The vehicle (100) according to claim 6, wherein at least two inner partition beams (40) are provided, and the at least two inner partition beams (40) are transverse partition beams (41); two ends of the at least two transverse partition beams (41) are respectively connected to the left sill beam (21) and the right sill beam (22), and are arranged at intervals in a front and rear direction; or
at least two inner partition beams (40) are provided, and the at least two inner partition beams (40) are longitudinal partition beams (42); two ends of the at least two longitudinal partition beams (42) are respectively connected to the front beam (23) and the rear beam (24), and are arranged at intervals in the left and right direction; or
at least two inner partition beams (40) are provided, the at least two inner partition beams (40) comprise a transverse partition beam (41) and a longitudinal partition beam (42), and the transverse partition beam (41) and the longitudinal partition beam (42) are arranged cross to each other; two ends of the transverse partition beam (41) are respectively connected to the left sill beam (21) and the right sill beam (22), and are arranged at intervals in a front and rear direction; and two ends of the longitudinal partition beam (42) are respectively connected to the front beam (23) and the rear beam (24), and are arranged at intervals in the left and right direction.

8. The vehicle (100) according to any one of claims 2 to 7, wherein a plurality of seat mounting beams (62) are provided, and the plurality of seat mounting beams (62) are arranged at intervals in a front and rear direction; and
the top plate assembly (60) further comprises an adaptor (63) provided with a third exhaust channel (631), and the adaptor (63) is arranged on at least one of the left sill beam (21) and the right sill beam (22); the first exhaust channels (612) of the plurality of seat mounting beams (62) are in communication with the third exhaust channel (631), and the third exhaust channel (631) is in communication with the second exhaust channel (223).

9. The vehicle (100) according to claim 8, wherein at least one of the left sill beam (21) and the right sill beam (22) is provided with a second air inlet (221), and the second air inlet (221) is provided on an upper side wall of the at least one of the left sill beam (21) and the right sill beam (22); and
the adaptor (63) extends along the front and rear direction, an inner side wall of the adaptor (63) is provided with a plurality of third air inlets (632) and a lower side wall of the adaptor (63) is provided with a first air outlet, the plurality of third air inlets (632) are in communication with the plurality of first exhaust channels (612), and the first air outlet is in communication with the second air inlet (221).

10. The vehicle (100) according to claim 9, wherein the lower side wall of the adaptor (63) is directly opened to form the first air outlet; or
a plurality of first air outlets are arranged at intervals on the lower side wall of the adaptor (63).

11. The vehicle (100) according to claim 9 or 10, wherein an upper side wall of at least one of the left sill beam (21) and the right sill beam (22) is directly opened to form the second air inlet (221); or
a plurality of second air inlets (221) are arranged at intervals on the upper side wall of the at least one of the left sill beam (21) and the right sill beam (22).

12. The vehicle (100) according to any one of claims 2 to 11, wherein the first air inlet (611) is provided with a cover (6111), and the cover (6111) is arranged at the first air inlet (611) to be openable and closable; or
a periphery of the cover (6111) is provided with a weakening structure portion that is capable of being disconnected; or
the cover (6111) is provided with an air vent.

13. The vehicle (100) according to any one of claims 1 to 12, wherein at least one of the left sill beam (21) and the right sill beam (22) is provided with a second air outlet (222), and the second air outlet (222) is arranged at an outside wall and/or a bottom wall of the at least one of the left sill beam (21) and the right sill beam (22).

14. The vehicle (100) according to claim 13, wherein the second air outlet (222) is provided with an explosion-proof valve (2221).

15. The vehicle (100) according to any one of claims 1 to 14, wherein at least one of:
the vehicle (100) further comprises a vehicle body (10); the vehicle body (10) is provided with a cockpit (11), the cockpit (11) is located above the chassis (20), and the top plate assembly (60) is connected with the cockpit (11) and acts as a floor of the cockpit (11);
the bottom plate (30) comprises a liquid cooling plate (31) and a protection plate (32), wherein the liquid cooling plate (31) is arranged at a bottom of the chassis (20), and the protection plate (32) is arranged at a bottom of the liquid cooling plate (31);
one of the top plate assembly (60) and the bottom plate (30) is fixed to the chassis (20) and another one of the top plate assembly (60) and the bottom plate (30) is detachably arranged at the chassis (20);
the top plate assembly (60) is provided with a plurality of reinforcing ribs (613), wherein the plurality of reinforcing ribs (613) are extended in the left and right direction and are arranged at intervals in the front and back directions, or the plurality of reinforcing ribs (613) are extended in the front and rear direction and are arranged at intervals in the left and right directions, or the plurality of reinforcing ribs (613) are extended respectively in the left and right direction and the front and back direction and are arranged cross to each other.

## Patentansprüche

1. Fahrzeug (100), mit:
einem Fahrgestell (20), mit einem linken Schwellerträger (21), einem rechten Schwellerträger (22), einem vorderen Querträger (23) und einem hinteren Querträger (24); wobei der vordere Querträger (23) zwischen dem linken Schwellerträger (21) und dem rechten Schwellerträger (22) verbunden ist, der hintere Querträger (24) zwischen dem linken Schwellerträger (21) und dem rechten Schwellerträger (22) verbunden ist, und der linke Schwellerträger (21), der rechte Schwellerträger (22), der vordere Querträger (23) und der hintere Querträger (24) gemeinsam einen Aufnahmeraum (25) definieren;
einer Bodenplatte (30), die an einem Boden des Fahrgestells (20) angeordnet und ausgebildet ist, um einen Boden des Aufnahmeraums (25) zu verschließen;
einer Deckplattenanordnung (60), die auf einer Oberseite des Fahrgestells (20) angeordnet und der Bodenplatte (30) gegenüberliegend angeordnet ist, wobei die Deckplattenanordnung (60) ausgebildet ist, eine Oberseite des Aufnahmeraums (25) zu verschließen; und
einer Vielzahl von Batteriezellen (50), wobei die Vielzahl der Batteriezellen (50) aufeinanderfolgend angeordnet und miteinander verbunden sind, und die Vielzahl der Batteriezellen (50) in dem Aufnahmeraum (25) angeordnet sind;
**dadurch gekennzeichnet, dass**: die Deckplattenanordnung (60) mit einem ersten Abgaskanal (612) versehen ist, zumindest einer von dem linken Schwellerträger (21) und dem rechten Schwellerträger (22) mit einem zweiten Abgaskanal (223) versehen ist, und der erste Abgaskanal (612) in Strömungsverbindung mit dem Aufnahmeraum (25) steht, der zweite Abgaskanal (223) in Strömungsverbindung sowohl mit dem ersten Abgaskanal (612) als auch mit einer äußeren Umgebung steht, um nach einem thermischen Durchgehen der Batteriezellen (50) einen Gasfeuerstrom abzuführen.

2. Fahrzeug (100) nach Anspruch 1, wobei die Deckplattenanordnung (60) eine Deckplatte (61) und einen Sitzmontageträger (62) aufweist; die Deckplatte (61) mit einem ersten Lufteinlass (611) versehen ist, der Sitzmontageträger (62) auf der Deckplatte (61) angeordnet ist und gemeinsam mit der Deckplatte (61) den ersten Abgaskanal (612) definiert, und der erste Lufteinlass (611) in Strömungsverbindung mit dem ersten Abgaskanal (612) steht.

3. Fahrzeug (100) nach Anspruch 2, wobei der Sitzmontageträger (62) sich in einer Links-Rechts-Richtung erstreckt, und eine Vielzahl von ersten Lufteinlässen (611) vorgesehen ist, und der Sitzmontageträger (62) der Vielzahl der ersten Lufteinlässe (611) in der Links-Rechts-Richtung entspricht.

4. Fahrzeug (100) nach Anspruch 2 oder 3, wobei der Sitzmontageträger (62) einen Trägerkörper (621) und eine innere Trennplatte (622) aufweist; der Trägerkörper (621) auf der Deckplatte (61) angeordnet ist, die innere Trennplatte (622) in dem Trägerkörper (621) angeordnet ist und einen Innenraum des Trägerkörpers (621) in einen oberen Kanal und einen unteren Kanal unterteilt, und der untere Kanal den ersten Abgaskanal (612) bildet.

5. Fahrzeug (100) nach einem der Ansprüche 2 bis 4, wobei die Vielzahl von Batteriezellen (50) in Reihen und Spalten in dem Aufnahmeraum (25) angeordnet sind, und ein erster Spalt (53) zwischen zwei benachbarten Reihen der Vielzahl von Batteriezellen (50) verbleibt, und der erste Lufteinlass (611) über dem ersten Spalt (53) angeordnet ist.

6. Fahrzeug (100) nach Anspruch 5, wobei das Fahrgestell (20) ferner einen inneren Trennträger (40) aufweist; der innere Trennträger (40) in dem Aufnahmeraum (25) angeordnet ist und den Aufnahmeraum (25) in mindestens zwei Teilaufnahmeräume (251) unterteilt, die Vielzahl der Batteriezellen (50) jeweils in den mindestens zwei Teilaufnahmeräumen (251) angeordnet sind, und ein zweiter Spalt (54) zwischen dem inneren Trennträger (40) und der Vielzahl der Batteriezellen (50) verbleibt; ein dritter Spalt (55) zwischen der Deckplatte (61) und einer Oberseite der Vielzahl der Batteriezellen (50) angeordnet ist, und der dritte Spalt (55) jeweils in Strömungsverbindung mit dem ersten Spalt (53), dem zweiten Spalt (54) und dem ersten Lufteinlass (611) steht.

7. Fahrzeug (100) nach Anspruch 6, wobei
mindestens zwei innere Trennträger (40) vorgesehen sind und die mindestens zwei inneren Trennträger (40) Quertrennträger (41) sind; zwei Enden der mindestens zwei Quertrennträger (41) jeweils mit dem linken Schwellerträger (21) und dem rechten Schwellerträger (22) verbunden sind und in der Vorne-Hinten-Richtung im Abstand voneinander angeordnet sind; oder
mindestens zwei innere Trennträger (40) vorgesehen sind und die mindestens zwei inneren Trennträger (40) Längstrennträger (42) sind; zwei Enden der mindestens zwei Längstrennträger (42) jeweils mit dem vorderer Querträger (23) und dem hinterer Querträger (24) verbunden sind und in der Links-Rechts-Richtung im Abstand voneinander angeordnet sind; oder
mindestens zwei innere Trennträger (40) vorgesehen sind, die mindestens zwei inneren Trennträger (40) einen Quertrennträger (41) und einen Längstrennträger (42) aufweisen, und der Quertrennträger (41) und der Längstrennträger (42) sich kreuzend zueinander angeordnet sind; zwei Enden des Quertrennträgers (41) jeweils mit dem linken Schwellerträger (21) und dem rechten Schwellerträger (22) verbunden sind und in der Vorne-Hinten-Richtung im Abstand voneinander angeordnet sind; und zwei Enden des Längstrennträgers (42) jeweils mit dem vorderer Querträger (23) und dem hinterer Querträger (24) verbunden sind und in der Links-Rechts-Richtung im Abstand voneinander angeordnet sind.

8. Fahrzeug (100) nach einem der Ansprüche 2 bis 7, wobei
eine Vielzahl von Sitzmontageträgern (62) vorgesehen ist und die Vielzahl der Sitzmontageträger (62) in der Vorne-Hinten-Richtung im Abstand voneinander angeordnet sind; und
die Deckplattenanordnung (60) ferner einen Adapter (63) aufweist, der mit einem dritten Abgaskanal (631) versehen ist, und der Adapter (63) an mindestens einem von dem linken Schwellerträger (21) und dem rechten Schwellerträger (22) angeordnet ist; die ersten Abgaskanäle (612) der Vielzahl von Sitzmontageträgern (62) in Strömungsverbindung mit dem dritten Abgaskanal (631) stehen, und der dritte Abgaskanal (631) in Strömungsverbindung mit dem zweiten Abgaskanal (223) steht.

9. Fahrzeug (100) nach Anspruch 8, wobei mindestens einer von dem linken Schwellerträger (21) und dem rechten Schwellerträger (22) mit einem zweiten Lufteinlass (221) versehen ist, und der zweite Lufteinlass (221) an einer oberen Seitenwand des mindestens einen von dem linken Schwellerträger (21) und dem rechten Schwellerträger (22) vorgesehen ist; und
der Adapter (63) sich in der Vorne-Hinten-Richtung erstreckt, eine innere Seitenwand des Adapters (63) mit einer Vielzahl von dritten Lufteinlässen (632) versehen ist und eine untere Seitenwand des Adapters (63) mit einem ersten Luftauslass versehen ist, die Vielzahl der dritten Lufteinlässe (632) in Strömungsverbindung mit der Vielzahl der ersten Abgaskanäle (612) stehen, und der erste Luftauslass in Strömungsverbindung mit dem zweiten Lufteinlass (221) steht.

10. Fahrzeug (100) nach Anspruch 9, wobei die untere Seitenwand des Adapters (63) direkt geöffnet ist, um den ersten Luftauslass zu bilden; oder
eine Vielzahl von ersten Luftauslässen an der unteren Seitenwand des Adapters (63) im Abstand voneinander angeordnet ist.

11. Fahrzeug (100) nach Anspruch 9 oder 10, wobei eine obere Seitenwand von mindestens einem von dem linken Schwellerträger (21) und dem rechten Schwellerträger (22) direkt geöffnet ist, um den zweiten Lufteinlass (221) zu bilden; oder
eine Vielzahl von zweiten Lufteinlässen (221) an der oberen Seitenwand des mindestens einen von dem linken Schwellerträger (21) und dem rechten Schwellerträger (22) im Abstand voneinander angeordnet ist.

12. Fahrzeug (100) nach einem der Ansprüche 2 bis 11, wobei der erste Lufteinlass (611) mit einer Abdeckung (6111) versehen ist, und die Abdeckung (6111) am ersten Lufteinlass (611) öffenbar und schließbar angeordnet ist; oder
ein Randbereich der Abdeckung (6111) mit einem Schwächungsstrukturabschnitt versehen ist, der trennbar ist; oder
die Abdeckung (6111) mit einer Lüftungsöffnung versehen ist.

13. Fahrzeug (100) nach einem der Ansprüche 1 bis 12, wobei mindestens einer von dem linken Schwellerträger (21) und dem rechten Schwellerträger (22) mit einem zweiten Luftauslass (222) versehen ist, und der zweite Luftauslass (222) an einer Außenwand und/oder einer Bodenwand des mindestens einen von dem linken Schwellerträger (21) und dem rechten Schwellerträger (22) angeordnet ist.

14. Fahrzeug (100) nach Anspruch 13, wobei der zweite Luftauslass (222) mit einem Explosionsschutzventil (2221) versehen ist.

15. Fahrzeug (100) nach einem der Ansprüche 1 bis 14, wobei mindestens eines von:
das Fahrzeug (100) ferner eine Fahrzeugkarosserie (10) aufweist; die Fahrzeugkarosserie (10) mit einer Fahrgastzelle (11) versehen ist, die Fahrgastzelle (11) über dem Fahrgestell (20) angeordnet ist, und die Deckplattenanordnung (60) mit der Fahrgastzelle (11) verbunden ist und als Boden der Fahrgastzelle (11) dient;
die Bodenplatte (30) eine Flüssigkühlplatte (31) und eine Schutzplatte (32) aufweist, wobei die Flüssigkühlplatte (31) an einem Boden des Fahrgestells (20) angeordnet ist, und die Schutzplatte (32) an einem Boden der Flüssigkühlplatte (31) angeordnet ist;
eine von der Deckplattenanordnung (60) und der Bodenplatte (30) am Fahrgestell (20) befestigt ist und eine andere von der Deckplattenanordnung (60) und der Bodenplatte (30) lösbar am Fahrgestell (20) angeordnet ist;
die Deckplattenanordnung (60) mit einer Vielzahl von Verstärkungsrippen (613) versehen ist, wobei die Vielzahl der Verstärkungsrippen (613) sich in der Links-Rechts-Richtung erstrecken und in der Vorne-Hinten-Richtung im Abstand voneinander angeordnet sind, oder die Vielzahl der Verstärkungsrippen (613) sich in der Vorne-Hinten-Richtung erstrecken und in der Links-Rechts-Richtung im Abstand voneinander angeordnet sind, oder die Vielzahl der Verstärkungsrippen (613) sich jeweils in der Links-Rechts-Richtung und der Vorne-Hinten-Richtung erstrecken und sich kreuzend angeordnet sind.

## Revendications

1. Véhicule (100), comprenant :
un châssis (20), comprenant une poutre de bas de caisse gauche (21), une poutre de bas de caisse droite (22), une poutre avant (23) et une poutre arrière (24) ; dans lequel la poutre avant (23) est connectée entre la poutre de bas de caisse gauche (21) et la poutre de bas de caisse droite (22), la poutre arrière (24) est connectée entre la poutre de bas de caisse gauche (21) et la poutre de bas de caisse droite (22), et la poutre de bas de caisse gauche (21), la poutre de bas de caisse droite (22), la poutre avant (23) et la poutre arrière (24) définissent en association une chambre de logement (25) ;
une plaque de fond (30), agencée au niveau d'un fond du châssis (20) et configurée pour fermer un fond de la chambre de logement (25) ;
un assemblage de plaque de sommet (60), agencé sur un sommet du châssis (20) et agencé à l'opposé de la plaque de fond (30), dans lequel l'assemblage de plaque de sommet (60) est configuré pour fermer un sommet de la chambre de logement (25) ; et
une pluralité de cellules de batterie (50), dans lequel les cellules de batterie de la pluralité de cellules de batterie (50) sont agencées en succession et sont connectées les unes aux autres, et les cellules de batterie de la pluralité de cellules de batterie (50) sont agencées dans la chambre de logement (25) ;
**caractérisé en ce que** :
l'assemblage de plaque de sommet (60) est muni d'un premier canal d'évacuation (612), au moins une poutre parmi la poutre de bas de caisse gauche (21) et la poutre de bas de caisse droite (22) est munie d'un deuxième canal d'évacuation (223), et le premier canal d'évacuation (612) est en communication avec la chambre de logement (25), le deuxième canal d'évacuation (223) est en communication avec le premier canal d'évacuation (612) de même qu'avec un environnement externe afin de décharger un flux de combustion de gaz après que les cellules de batterie (50) ont subi un emballement thermique.

2. Véhicule (100) selon la revendication 1, dans lequel l'assemblage de plaque de sommet (60) comprend une plaque de sommet (61) et une poutre de montage de siège(s) (62) ; la plaque de sommet (61) est munie d'une première entrée d'air (611), la poutre de montage de siège(s) (62) est agencée sur la plaque de sommet (61) et elle définit le premier canal d'évacuation (612) en association avec la plaque de sommet (61), et la première entrée d'air (611) est en communication avec le premier canal d'évacuation (612).

3. Véhicule (100) selon la revendication 2, dans lequel la poutre de montage de siège(s) (62) est étendue dans des directions gauche et droite, et des premières entrées d'air d'une pluralité de premières entrées d'air (611) sont prévues, et la poutre de montage de siège(s) (62) correspond à la pluralité de premières entrées d'air (611) dans les directions gauche et droite.

4. Véhicule (100) selon la revendication 2 ou 3, dans lequel la poutre de montage de siège(s) (62) comprend un corps de poutre (621) et une plaque de partition interne (622) ; le corps de poutre (621) est agencé sur la plaque de sommet (61), la plaque de partition interne (622) est agencée dans le corps de poutre (621) et elle divise un espace interne du corps de poutre (621) selon un canal supérieur et un canal inférieur, et le canal inférieur constitue le premier canal d'évacuation (612).

5. Véhicule (100) selon l'une quelconque des revendications 2 à 4, dans lequel les cellules de batterie de la pluralité de cellules de batterie (50) sont agencées selon des rangées et selon des colonnes dans la chambre de logement (25), et un premier espace (53) est laissé entre deux rangées adjacentes de la pluralité de cellules de batterie (50), et la première entrée d'air (611) est agencée au-dessus du premier espace (53).

6. Véhicule (100) selon la revendication 5, dans lequel le châssis (20) comprend en outre une poutre de partition interne (40) ; la poutre de partition interne (40) est agencée dans la chambre de logement (25) et elle divise la chambre de logement (25) selon au moins deux sous-chambres de logement (251), les cellules de batterie de la pluralité de cellules de batterie (50) sont respectivement agencées dans les au moins deux sous-chambres de logement (251), et un deuxième espace (54) est laissé entre la poutre de partition interne (40) et la pluralité de cellules de batterie (50) ; un troisième espace (55) est agencé entre la plaque de sommet (61) et un sommet de la pluralité de cellules de batterie (50), et le troisième espace (55) est respectivement en communication avec le premier espace (53), le deuxième espace (54) et la première entrée d'air (611).

7. Véhicule (100) selon la revendication 6, dans lequel :
au moins deux poutres de partition interne (40) sont prévues, et les au moins deux poutres de partition interne (40) sont des poutres de partition transversale (41) ; deux extrémités des au moins deux poutres de partition transversale (41) sont respectivement connectées à la poutre de bas de caisse gauche (21) et à la poutre de bas de caisse droite (22), et sont agencées selon des intervalles dans des directions avant et arrière ; ou
au moins deux poutres de partition interne (40) sont prévues, et les au moins deux poutres de partition interne (40) sont des poutres de partition longitudinale (42) ; deux extrémités des au moins deux poutres de partition longitudinale (42) sont respectivement connectées à la poutre avant (23) et à la poutre arrière (24), et sont agencées selon des intervalles dans les directions gauche et droite ; ou
au moins deux poutres de partition interne (40) sont prévues, les au moins deux poutres de partition interne (40) comprennent une poutre de partition transversale (41) et une poutre de partition longitudinale (42), et la poutre de partition transversale (41) et la poutre de partition longitudinale (42) sont agencées de telle sorte qu'elles se croisent l'une l'autre ; deux extrémités de la poutre de partition transversale (41) sont respectivement connectées à la poutre de bas de caisse gauche (21) et à la poutre de bas de caisse droite (22), et sont agencées selon des intervalles dans des directions avant et arrière ; et deux extrémités de la poutre de partition longitudinale (42) sont respectivement connectées à la poutre avant (23) et à la poutre arrière (24), et sont agencées selon des intervalles dans les directions gauche et droite.

8. Véhicule (100) selon l'une quelconque des revendications 2 à 7, dans lequel :
des poutres de montage de siège(s) d'une pluralité de poutres de montage de siège(s) (62) sont prévues, et les poutres de montage de siège(s) de la pluralité de poutres de montage de siège(s) (62) sont agencées selon des intervalles dans des directions avant et arrière ; et
l'assemblage de plaque de sommet (60) comprend en outre un adaptateur (63) qui est muni d'un troisième canal d'évacuation (631), et l'adaptateur (63) est agencé sur au moins une poutre parmi la poutre de bas de caisse gauche (21) et la poutre de bas de caisse droite (22) ; les premiers canaux d'évacuation (612) de la pluralité de poutres de montage de siège(s) (62) sont en communication avec le troisième canal d'évacuation (631), et le troisième canal d'évacuation (631) est en communication avec le deuxième canal d'évacuation (223).

9. Véhicule (100) selon la revendication 8, dans lequel :
au moins une poutre parmi la poutre de bas de caisse gauche (21) et la poutre de bas de caisse droite (22) est munie d'une deuxième entrée d'air (221), et la deuxième entrée d'air (221) est prévue sur une paroi latérale supérieure de l'au moins une poutre parmi la poutre de bas de caisse gauche (21) et la poutre de bas de caisse droite (22) ; et
l'adaptateur (63) est étendu suivant les directions avant et arrière, une paroi latérale interne de l'adaptateur (63) est munie d'une pluralité de troisièmes entrées d'air (632) et une paroi latérale inférieure de l'adaptateur (63) est munie d'une première sortie d'air, les troisièmes entrées d'air de la pluralité de troisièmes entrées d'air (632) sont en communication avec la pluralité de premiers canaux d'évacuation (612), et la première sortie d'air est en communication avec la deuxième entrée d'air (221).

10. Véhicule (100) selon la revendication 9, dans lequel :
la paroi latérale inférieure de l'adaptateur (63) est directement ouverte pour former la première sortie d'air ; ou
des premières sorties d'air d'une pluralité de premières sorties d'air sont agencées selon des intervalles sur la paroi latérale inférieure de l'adaptateur (63).

11. Véhicule (100) selon la revendication 9 ou 10, dans lequel :
une paroi latérale supérieure d'au moins une poutre parmi la poutre de bas de caisse gauche (21) et la poutre de bas de caisse droite (22) est directement ouverte pour former la deuxième entrée d'air (221) ; ou
des deuxièmes entrées d'air d'une pluralité de deuxièmes entrées d'air (221) sont agencées selon des intervalles sur la paroi latérale supérieure de l'au moins une poutre parmi la poutre de bas de caisse gauche (21) et la poutre de bas de caisse droite (22).

12. Véhicule (100) selon l'une quelconque des revendications 2 à 11, dans lequel :
la première entrée d'air (611) est munie d'un capuchon (6111), et le capuchon (6111) est agencé au niveau de la première entrée d'air (611) de manière à pouvoir être ouvert et fermé ; ou
une périphérie du capuchon (6111) est munie d'une section de structure de fragilisation qui peut être déconnectée ; ou
le capuchon (6111) est muni d'un évent d'aération.

13. Véhicule (100) selon l'une quelconque des revendications 1 à 12, dans lequel au moins une poutre parmi la poutre de bas de caisse gauche (21) et la poutre de bas de caisse droite (22) est munie d'une seconde sortie d'air (222), et la seconde sortie d'air (222) est agencée au niveau d'une paroi externe et/ou d'une paroi de fond de l'au moins une poutre parmi la poutre de bas de caisse gauche (21) et la poutre de bas de caisse droite (22).

14. Véhicule (100) selon la revendication 13, dans lequel la seconde sortie d'air (222) est munie d'une soupape antidéflagrante (2221).

15. Véhicule (100) selon l'une quelconque des revendications 1 à 14, dans lequel au moins l'une des assertions suivantes est satisfaite :
le véhicule (100) comprend en outre une carrosserie de véhicule (10) ; la carrosserie de véhicule (10) est munie d'un habitacle (11), l'habitacle (11) est localisé au-dessus du châssis (20), et l'assemblage de plaque de sommet (60) est connecté à l'habitacle (11) et joue le rôle de plancher de l'habitacle (11) ;
la plaque de fond (30) comprend une plaque de refroidissement de liquide (31) et une plaque de protection (32), dans lequel la plaque de refroidissement de liquide (31) est agencée au niveau d'un fond du châssis (20), et la plaque de protection (32) est agencée au niveau d'un fond de la plaque de refroidissement de liquide (31) ;
une plaque parmi l'assemblage de plaque de sommet (60) et la plaque de fond (30) est fixée au châssis (20) et une autre plaque parmi l'assemblage de plaque de sommet (60) et la plaque de fond (30) est agencée de façon amovible au niveau du châssis (20) ;
l'assemblage de plaque de sommet (60) est muni d'une pluralité de nervures de renforcement (613), dans lequel les nervures de renforcement de la pluralité de nervures de renforcement (613) sont étendues dans les directions gauche droite et sont agencées selon des intervalles dans les directions avant et arrière, ou les nervures de renforcement de la pluralité de nervures de renforcement (613) sont étendues dans les directions avant et arrière et sont agencées selon des intervalles dans les directions gauche et droite, ou les nervures de renforcement de la pluralité de nervures de renforcement (613) sont étendues respectivement dans les directions gauche et droite et dans les directions avant et arrière et sont agencées de telle sorte qu'elles se croisent les unes les autres.
